(19) **Europäisches Patentamt / European Patent Office / Office européen des brevets**

(11) **EP 4 586 476 A1**

(12) **EUROPEAN PATENT APPLICATION**

(43) Date of publication:
**16.07.2025 Bulletin 2025/29**

(21) Application number: **24211879.2**

(22) Date of filing: **08.11.2024**

(51) International Patent Classification (IPC):
**H02M 1/00** $^{(2006.01)}$    **H02M 3/00** $^{(2006.01)}$
**H02M 3/335** $^{(2006.01)}$

(52) Cooperative Patent Classification (CPC):
**H02M 3/33523; H02M 1/0025; H02M 1/0058;**
**H02M 3/01; H02M 3/33571**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.01.2024 EP 24151026**

(71) Applicant: **Infineon Technologies Austria AG**
**9500 Villach (AT)**

(72) Inventors:
• **MEDINA-GARCIA, Alfredo**
  **81737 Munich (DE)**
• **DAIMER, Josef**
  **84434 Kirchberg (DE)**

(74) Representative: **Elkington and Fife LLP**
**Prospect House**
**8 Pembroke Road**
**Sevenoaks, Kent TN13 1XR (GB)**

(54) **CONTROL OF AN ASYMMETRIC HALF BRIDGE CONVERTER**

(57)    A control circuit is provided, for controlling switching elements of an asymmetric half bridge (AHB) converter. The AHB converter includes a first switching element, a second switching element, a capacitor, and a transformer having a primary side and a secondary side. The control circuit includes a first output, for controlling the first switching element; and a second output, for controlling the second switching element. The control circuit also includes control logic, configured to generate a first pulse width modulated, PWM, control signal at the first output and a second PWM control signal at the second output. The control logic may have a first operation mode in which it is configured to cause a magnetizing current of the transformer to remain greater than zero throughout a switching period of the first and second PWM control signals. Also provided are: an AHB converter; a method of controlling an AHB converter; and a computer program for causing a processor or programmable controller to carry out the method.

FIGURE 3

EP 4 586 476 A1

**Description**

FIELD

This invention relates to switched-mode power supplies - in particular, to asymmetric half bridge (AHB) converters. It relates especially to control of switching elements in such power supplies.

BACKGROUND

The asymmetric half bridge converter is an attractive topology for power conversion applications - especially at low to medium powers. Using this topology, with a relatively small number of components and a simple circuit design, flexible control of power conversion can be achieved. The AHB converter can be operated in a resonant mode with high efficiency.

In many applications, switched-mode power supplies are called upon to supply more than their nominal rated power output for a short period of time. It is desirable for the power supply to handle these "over-power" demands stably and efficiently.

Lee et al. (Sung-Sae Lee, Sang-Kyoo Han, and Gun-Woo Moon, "Analysis and Design of Asymmetrical ZVS PWM Half Bridge Forward Converter with Flyback Type Transformer", 35th Annual IEEE Power Electronics Specialists Conference, 2004) discloses a converter that is operated with zero voltage switching at the primary side.

SUMMARY

Existing control regimes for AHB converters do not necessarily handle over-power requirements in an optimal way. The present inventors have identified a need for an improved control regime that can better handle over-power situations.

A control circuit is provided, for controlling switching elements of an asymmetric half bridge (AHB) converter. The AHB converter includes a first switching element, a second switching element, a capacitor, and a transformer having a primary side and a secondary side. The control circuit includes a first output, for controlling the first switching element; and a second output, for controlling the second switching element. The control circuit also includes control logic, configured to generate a first pulse width modulated, PWM, control signal at the first output and a second PWM control signal at the second output. The control logic may have a first operation mode in which it is configured to cause a magnetizing current of the transformer to remain greater than zero throughout a switching period of the first and second PWM control signals. Also provided are: an AHB converter; a method of controlling an AHB converter; and a computer program for causing a processor or programmable controller to carry out the method.

According to one aspect there is provided a control circuit for controlling an asymmetric half bridge, AHB, converter comprising a first switching element, a second switching element, a capacitor, and a transformer having a primary side and a secondary side, the control circuit comprising:

a first output, for controlling the first switching element;
a second output, for controlling the second switching element; and
control logic, configured to generate a first pulse width modulated, PWM, control signal at the first output and a second PWM control signal at the second output.

According to some examples, there is provided a control circuit for controlling an asymmetric half bridge, AHB, converter comprising a first switching element, a second switching element, a capacitor, and a transformer having a primary side and a secondary side, the control circuit comprising:

a first output, for controlling the first switching element;
a second output, for controlling the second switching element; and
control logic, configured to generate a first pulse width modulated, PWM, control signal at the first output and a second PWM control signal at the second output,
wherein the control logic has a first operation mode in which it is configured to cause a magnetizing current of the transformer to remain greater than zero throughout a switching period of the first and second PWM control signals.

This can enable the AHB converter to operate in a continuous current mode (CCM). The AHB converter may be configured to operate as a resonant converter.

The switching period may be defined as beginning when the first switching element is switched on. The control logic may be configured to switch on the first switching element before the transformer is demagnetized, at the end of the preceding switching period.

The switching elements may be connected in series with one another. The transformer may have a primary winding at the primary side and a secondary winding at the secondary side. One of the switching elements may be connected in series with the primary winding of the transformer. The other switching element may be connected in parallel with the primary winding. The capacitor and the primary winding may form (part of) a resonant LC circuit portion. The capacitor may be connected in series with the primary winding.

In the first operation mode, the control logic may be configured to cause a current in the primary winding to be greater than zero when the switching element in series with the primary winding is switched on. This can help to avoid interrupting a resonant operation of the converter. It can help to reduce voltage stress on a rectifier element on the secondary side and/or can help to facilitate zero current switching of the rectifier element. This can help to reduce switching losses - in particular, in the rectifier element at the secondary side. Optionally, the control logic may be configured to cause the current in the primary winding to be substantially equal to the magnetizing current, when the switching element in series with the primary winding is switched on. In other words, at the moment when the series-connected switching element is switched on, the magnetizing current and the current in the primary winding may both be positive, and they may be equal, or approximately equal. "Approximately equal" may be understood as meaning that the (instantaneous) amplitude of one current is within 10%, optionally within 5% of the other.

The AHB converter may be configured to transfer energy from the primary side to the secondary side only while one of the two switching elements is on. In particular, it may be configured to transfer energy to the secondary side only during the on-time of the second switching element.

The AHB converter may comprise a rectifier element (for example, a diode or a switching element configured as a synchronous rectifier) in series with the secondary winding of the transformer. In particular, exactly one rectifier element (and not more than one) may be connected in series with the secondary winding. The rectifier element may be coupled in series with a load that is powered by the AHB converter. An output capacitor may be connected in parallel with the load and in series with the rectifier element.

Successive switching periods may have different durations. That is, a switching frequency of the first switching element (and/or the second switching element) might not be a fixed frequency.

The control circuit may further comprise an input, for receiving a feedback control signal from the secondary side.

The control circuit may further comprise a current sense input, for receiving a signal indicative of a magnetizing current (Imag) in the primary winding, wherein the control logic is configured to switch off the first switching element based on the magnetizing current in the primary winding.

In some examples, the control logic may be configured to control the first switching element based on an instantaneous magnetizing current in the primary winding. In other examples, the control logic may be configured to control the first switching element based on an average magnetizing current in the primary winding. For example, the average magnetizing current may be determined by sampling the magnetizing current in several switching periods. In some examples, the magnetizing current may be sampled at the mid-point of the on-time of one of the switching elements - in particular, the on-time of the first switching element.

The signal indicative of the magnetizing current may be derived from a current flowing in an auxiliary winding of the transformer, which is magnetically coupled to the primary winding.

The control logic may be configured to switch off the first switching element responsive to the magnetizing current in the primary winding meeting a first threshold condition.

In particular, the control logic may be configured to switch off the first switching element when the magnetizing current reaches a comparison value (CS_comp). The comparison value may be based on the feedback control signal from the secondary side.

In some examples, the meeting of the first threshold condition may be determined based on an instantaneous magnetizing current in the primary winding. In other examples, the meeting of the first threshold condition may be determined based on an average magnetizing current in the primary winding.

The control logic may be configured, in the first operation mode, to switch on the first switching element at the end of a first time interval.

The control logic may be configured to generate the first PWM control signal such that it switches on the first switching element after the first time interval.

The first time interval may be determined based on a resonant frequency of the resonant LC circuit portion. The first time interval may be set long enough to permit resonant operation of the resonant LC circuit portion.

The timing of switching-on the first switching element may be independent of the magnetizing current in the primary winding. The magnetizing current in the primary winding may be non-zero when the first switching element is switched on.

The first time interval may begin at one of the following times: when the first switching element is switched on; when the first switching element is switched off; and when the second switching element is switched on.

Each of the times referred to may be the most recent previous relevant time instant. Thus, the first time interval may be measured from the most recent previous time at which the first switching element was switched on. Alternatively, the first time interval may be measured from the most recent previous time at which the first switching element was switched off. Alternatively, the first time interval may be measured from the most recent previous time at which the second switching element was switched on.

The control logic may be configured, in the first operation mode, to switch off the second switching element at the end of a second time interval (Tt).

The second time interval may begin at a time at which the second switching element was switched on. Therefore, the second time interval may be the portion of the switching period during which the second switching element is on.

The control logic may be configured to switch on the second switching element at the end of a first dead time (Td1).

The first dead time may begin when the first switching element is switched off. The dead time helps to avoid a shoot-through condition, in which the first switching element and the second switching element are both conducting simultaneously.

The control logic may be configured, in the first operation mode, to switch on the first switching element at the end of a second dead time (Td3).

The second dead time may begin when the second switching element is switched off. The dead time helps to avoid a shoot-through condition, in which the first switching element and the second switching element are both conducting simultaneously.

The control logic may have a second operation mode in which it is configured to switch on the first switching element based on the magnetizing current in the primary winding meeting a second threshold condition.

In particular, the control logic may be configured to switch on the first switching element based on the magnetizing current reaching zero. That is, in the second operation mode, the control logic may operate based on zero current detection (ZCD).

The control logic may be configured, in the second operation mode, to switch on the first switching element at the end of a third dead time (Td2), wherein the third dead time begins when the magnetizing current in the primary winding meets the second threshold condition.

The dead time helps to avoid a shoot-through condition, in which the first switching element and the second switching element are both conducting simultaneously.

The control logic may be configured, in the first operation mode, to switch on the second switching element for a second time interval (Tt), wherein the control logic is optionally configured to select a duration of the second time interval based on a duration of a corresponding second time interval in the second operation mode.

The corresponding second time interval may be the most recent previous time interval (Tt-1) during which the second switching element was switched on, while the second operation mode was engaged. That is, the control logic may be configured, in the first operation mode, to switch on the second switching element for the same duration that it was switched on in the most recent switching period in the second operation mode. Preserving the on-time of the second switching element in this way may help to enable resonant operation of the converter.

The control logic may be configured to switch off the first switching element when the magnetizing current in the primary winding reaches a comparison value (CS_comp), wherein the comparison value (CS_comp) is optionally based on the feedback control signal from the secondary side, and wherein the control logic is optionally configured to engage the first operation mode responsive to the comparison value (CS_comp) reaching a comparison value threshold (CS_CCM_th).

The control logic may be configured to select the second mode responsive to the comparison value not reaching the comparison value threshold.

The comparison value threshold may be set based on a predetermined maximum demagnetization time (Tdemag_limit) of the transformer. To obtain greater over-power, this maximum demagnetization time (and the associated comparison value threshold) may be set relatively lower, so that the control circuit changes to the first mode more readily. If less over-power is desired, the maximum demagnetization time (and the associated comparison value threshold) may be set relatively higher, so that the control circuit changes is slower to change to the first mode.

The control logic may be configured to dynamically adjust the comparison value threshold (CS_CCM_th).

In some examples, the comparison value threshold (CS_CCM_th) may be adjusted based on the output voltage. At lower output voltages, the resonant period may increase (that is, the resonant frequency may decrease). Consequently, the maximum demagnetization time (Tdemag_limit) may need to increase accordingly, to permit resonant operation at the lower resonant frequency. Accordingly, the comparison value threshold (CS_CCM_th) may be adjusted in inverse relation to the output voltage (that is, increasing the threshold when the output voltage is lower and decreasing the threshold when the output voltage is higher).

The control circuit may be provided by or included in a controller. The controller may be a programmable controller, for example. The controller (and/or the control circuit) may comprise a central processing unit (CPU) configured to run software (in particular, firmware).

Also provided is a method of controlling an asymmetric half bridge, AHB, converter comprising a first switching element, a second switching element, a capacitor, and a transformer having a primary side and a secondary side, the method comprising:

　　generating a first pulse width modulated, PWM, control signal for controlling the first switching element, and
　　generating a second PWM control signal for controlling the second switching element,
　　wherein the first and second PWM control signals are generated such that, in a first operation mode, a magnetizing current of the transformer remains greater than zero throughout a switching period of the first and second PWM control signals.

As discussed above, the transformer may having a primary winding at the primary side and a secondary winding at the secondary side, wherein one of the switching elements is connected in series with the primary winding and the other switching element is connected in parallel with the primary winding. Also as discussed above, the switching elements may be connected in series with one another.

The first and second PWM control signals may be generated such that, in a first operation mode, a current in the primary winding is greater than zero when the switching element in series with the primary winding is switched on. Optionally, the first and second PWM control signals may be generated such that, in a first operation mode, the current in the primary winding is substantially equal to the magnetizing current, at the moment when the switching element in series with the primary winding is switched on.

The method may comprise receiving a feedback control signal from the secondary side. The first and second PWM control signals may be generated at least in part based on the feedback control signal.

The method may comprise receiving a signal indicative of a magnetizing current (Imag) in the primary winding, and generating the first PWM control signal to switch off the first switching element based on the magnetizing current in the primary winding.

In particular, the method may comprise generating the first PWM control signal so as to switch off the first switching element responsive to the magnetizing current in the primary winding meeting a first threshold condition.

The method may comprise, in the first operation mode, generating the first PWM control signal so as to switch on the first switching element at the end of a first time interval.

The method may comprise, in the first operation mode, generating the second PWM control signal so as to switch off the second switching element at the end of a second time interval (Tt).

The method may comprise (in either operation mode), generating the second PWM control signal so as to switch on the second switching element at the end of a first dead time (Td1).

The method may comprise, in the first operation mode, generating the first PWM control signal so as to switch on the first switching element at the end of a second dead time (Td3).

The method may comprise, in a second operation mode, generating the first PWM control signal so as to switch on the first switching element based on the magnetizing current in the primary winding meeting a second threshold condition.

The method may comprise, in the second operation mode, generating the first PWM control signal so as to switch on the first switching element at the end of a third dead time (Td2), wherein the third dead time begins when the magnetizing current in the primary winding meets the second threshold condition.

The method may comprise, in the first operation mode, generating the second PWM control signal so as to switch on the second switching element for a second time interval (Tt), wherein the duration of the second time interval is selected based on a duration of a corresponding second time interval in the second operation mode.

The method may comprise (in either operation mode) generating the first PWM control signal so as to switch off the first switching element when the magnetizing current in the primary winding reaches a comparison value (CS_comp), wherein the comparison value (CS_comp) is based on the feedback control signal from the secondary side, and wherein the method comprises engaging the first operation mode responsive to the comparison value (CS_comp) reaching a comparison value threshold (CS_CCM_th).

The method may comprise dynamically adjusting the comparison value threshold (CS_CCM_th).

Also provided is a computer program comprising computer program code configured to cause a programmable controller to carry out a method as summarized above when said computer program is run on the programmable controller.

The programmable controller may comprise a CPU. The computer program may be configured to run on the CPU of the programmable controller.

The computer program may be stored on a computer-readable storage medium, optionally a non-transitory computer-readable storage medium.

Also provided is an asymmetric half bridge, AHB, converter comprising:

a first switching element;
a second switching element;
a capacitor;
a transformer having a primary side and a secondary side; and
a control circuit as summarized above and/or according to any one of the appended claims, wherein:

the first output of the control circuit is coupled to a control terminal of the first switching element; and
the second output of the control circuit is coupled to a control terminal of the second switching element.

An input of the control circuit may be configured to receive a feedback control signal from the secondary side.

The switching elements may be transistors - for example, field effect transistors (FETs). The control terminal may be a gate of the respective transistor. The outputs of the control circuit may be coupled to the respective control terminals of the switching elements directly or via driver circuits.

The first switching element may be a high side switching element. The second switching element may be a low side switching element. In another case, the first switching element may be a low side switching element and the second switching element may be a high side switching element.

In some examples, the high side switching element may be connected in series with the primary winding of the transformer. The low side switching element may be connected in parallel with the primary winding.

In other examples, the low side switching element may be connected in series with the primary winding of the transformer. The high side switching element may be connected in parallel with the primary winding.

The capacitor and the primary winding may form a resonant LC circuit portion.

As mentioned above, the capacitor may be connected in series with the primary winding.

The AHB converter may be configured to transfer energy from the primary side to the secondary side only while one of the two switching elements is on. In particular, it may be configured to transfer energy to the secondary side only during the on-time of the second switching element.

The AHB converter may comprise a rectifier element (for example, a diode or a controlled switching element configured as a synchronous rectifier) in series with the secondary winding of the transformer. In particular, exactly one rectifier element (and not more than one) may be connected in series with the secondary winding. The rectifier element may be coupled in series with a load that is powered by the AHB converter. An output capacitor may be connected in parallel with the load and in series with the rectifier element

At least one of the switching elements (in particular, on the primary side) optionally comprises or consists of one of: a gallium nitride transistor; and a silicon carbide transistor.

The transistor may be a field-effect transistor (FET). A GaN transistor may be more robust to repeated switching under voltage stress (for example, compared with an equivalent metal oxide semiconductor (MOS) FET). Similarly, a SiC transistor may be robust to switching repeatedly under higher voltages, as a result of having a relatively high breakdown electric field strength.

BRIEF DESCRIPTION OF THE DRAWINGS

The invention will now be described by way of example with reference to the accompanying drawings, in which:

Fig. 1 is a simplified circuit diagram showing an AHB converter according to an example;
Fig. 2A is a graph showing current and voltage functions within the AHB converter of Fig. 1 when operating at 100% power;
Fig. 2B is a graph showing current and voltage functions within the AHB converter of Fig. 1 when operating at 200% power, when the AHB converter is controlled according to a comparative example;
Fig. 3 is a graph showing current and voltage functions within the AHB converter of Fig. 1 when operating at 200% power, when the AHB converter is controlled using an operating mode according to an example of the present disclosure;
Fig. 4 is a plot showing control signals for the AHB converter of Fig. 1, illustrating a transition between operating modes;
Fig. 5 shows an equivalent circuit for the primary side of the AHB converter, during a transfer phase;
Fig. 6 is a simplified circuit diagram showing an AHB converter according to a second example;
Fig. 7 is a circuit diagram showing an AHB converter according to a third example;
Fig. 8 is a state diagram illustrating two operation modes and transitions between them;
Fig. 9 is a flowchart illustrating a control method according to an example;
Fig. 10 is a block diagram illustrating a controller according to an example;
Fig. 11 is a simplified circuit diagram showing an AHB converter according to a variant of the example of Fig. 1;
Fig. 12 is a simplified circuit diagram showing an AHB converter according to a variant of the second example of Fig. 6; and
Fig. 13 is a circuit diagram showing an AHB converter according to a variant of the third example of Fig. 7.

It should be noted that these figures are diagrammatic and not drawn to scale. Relative dimensions and proportions of parts of these figures have been shown exaggerated or reduced in size, for the sake of clarity and convenience in the drawings.

DETAILED DESCRIPTION

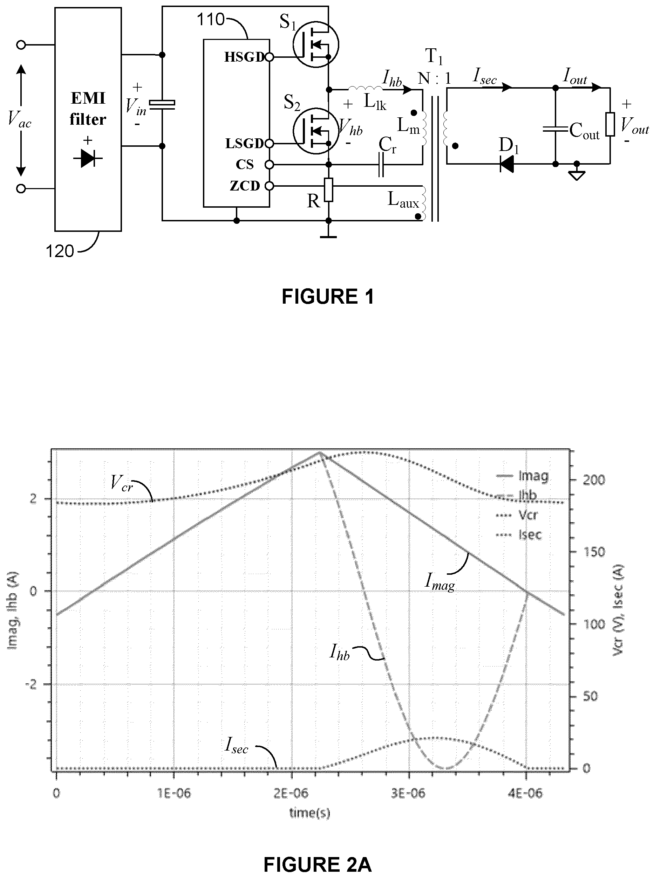

Fig. 1 shows an AHB converter according to an example. The converter is controlled by a control circuit 110. An alternating current (ac) input Vac is rectified and filtered to attenuate electromagnetic interference (EMI) by a filtering and rectification block 120. The output of the filtering and rectification block 120 provides a direct current (dc) input voltage Vin for the AHB converter. The AHB converter comprises a first switching element S1, a second switching element S2, and a transformer T1. The primary winding of the transformer presents a magnetizing inductance Lm and a leakage inductance Llk. The transformer T1 has a turns ratio of N:1 between the primary side and the secondary side. As shown by the dot notation in Fig. 1, the transformer T1 is wound such that the the primary and secondary current and voltages are 180° out of phase. That is, the primary and secondary currents flow in opposite directions to one another.

The two switching elements, S1 and S2 are connected in series via a common node. The primary winding of the transformer is connected in series with the first switching element S1, and in parallel with the second switching element S2. A capacitor Cr is connected in series with the primary winding (also in parallel with the second switching element S2). The capacitor Cr and the second switching element S2 are connected to ground (that is, the negative terminal of the input voltage Vin) via a resistance R. The capacitor Cr and the primary winding together form a resonant LC circuit portion.

The first switching element S1 is connected between the positive terminal of the input voltage Vin and the common node. The second switching element S2 is connected between the common node and the resistance R. The primary winding is also connected to the common node. The first switching element S1 may be denoted the high side switching element. The second switching element S2 may be denoted the low side switching element. The switching elements are controlled so that they are never on at the same time - that is, each one is off when the other is on. This avoids a shoot-through current, which could damage the components of the converter.

In the present example, the switching elements are field-effect transistors (FETs). The drain of the first FET (the first switching element) is connected to the positive input voltage Vin. The source of the first FET is connected to the common node. The drain of the second FET (the second switching element) is connected to the common node. The source of the second FET is connected to the capacitor Cr and the resistance R.

The voltage across the resistance R, the primary winding and the capacitor (and, respectively, across the second switching element S2 and the resistance R) is denoted Vhb. The current in the primary winding is denoted Ihb.

The two switching elements are controlled by PWM control signals generated by the control circuit 110. The control terminal of the first switching element (that is, the gate of the first FET) is coupled to a high side gate driver (HSGD) output of the control circuit 110. The control terminal of the second switching element (that is, the gate of the second FET) is coupled to a low side gate driver (LSGD) output of the control circuit 110.

The node to which the capacitor Cr, the resistance R, and the second switching element are connected is coupled to a current sense input CS of the control circuit 110. An auxiliary winding Laux of the transformer is connected between an input ZCD of the control circuit 110 and ground. This enables the control circuit 110 to sense a magnetizing current Imag, at the input ZCD. The acronym ZCD stands for "zero current detection", because the input ZCD may be used by the control circuit 110 to detect demagnetization of the transformer, in one operation mode.

The secondary winding of the transformer is coupled to a load, which is powered by the AHB converter. The AH B converter delivers an output voltage Vout and an output current Iout. An output capacitor (also referred to as a smoothing capacitor) Cout is connected in parallel with the load. A rectifier element is provided in series with the output capacitor Cout and the load. The rectifier element is also in series with the secondary winding. In the present example, the rectifier element is provided by a diode D1.

Note that the control circuit 110 also has a further input for receiving a feedback control signal from the secondary side of the transformer (for example, based on the output current and/or output voltage). However, this input and the associated feedback network are omitted from Fig. 1, for simplicity.

The AHB converter operates in two phases. The first phase is a charging phase. The second switching element S2 is switched off. The first switching element S1 is switched on, and energy is stored in the primary winding of the transformer and the capacitor Cr. In other words, the magnetizing inductance Lm is energised and the capacitor Cr is charged. No current flows in the secondary winding, because the rectifier element is reverse biased in this phase.

The second phase is an energy-transfer phase. The first switching element is switched off and the second switching element is switched on. The current in the primary winding continues to flow (now through the second switching element) but begins to decrease. With the diode D1 at the secondary side of the transformer T1 now forward biased, a current Isec flows in the secondary winding. The current in the primary winding continues to decrease and goes negative. It reaches a peak negative value and begins to rise again towards zero, due to the resonance of the LC circuit. The current at the secondary side begins to diminish again. At the end of the transfer phase, the second switching element is switched off. The first switching element can then be switched on again, beginning the next charging phase.

Conventionally, the first switching element would not be switched on again until the transformer is demagnetized. This can be detected by sensing the magnetizing current Imag, via the input ZCD of the control circuit 110. When the magnetizing current reaches zero, the current Ihb in the primary winding is also equal to zero and the voltage Vhb is likewise zero. Conventionally, it would have been considered advantageous to switch off the second switching element at this moment, because the voltage across the switching element (that is, the drain-source voltage, in the example of Fig. 1) is equal to zero. This avoids so-called "hard switching" of the second switching elementthat is, switching it off while there is a non-zero voltage across it. Hard switching can lead to voltage stress on the switching element (for example, transistor) and increased switching losses with some types of switching element.

Note that, when detecting the zero current condition of the magnetizing current using an auxiliary winding, as illustrated in Fig. 1, both switching elements should be off at the moment that the zero current is detected. However, this does not present any practical difficulties, because the zero current condition is used (in the conventional approach) to decide when to switch on the first switching element, after the second switching element has been switched off. In other words, both switches will always be off, in the interval when zero current detection is needed.

Fig. 2A shows current and voltage waveforms associated with the operation of the AHB converter of Fig. 1. The magnetizing current Imag ramps up in the charging (magnetizing) phase and ramps down in the transfer (demagnetizing) phase. The current Ihb in the primary winding ramps up with the magnetizing current Imag in the charging phase. In the transfer phase, it swings negative in a resonant fashion, while the magnetizing current Imag ramps down. The current Isec in the secondary winding is zero during the charging phase and flows during the transfer phase, reaching a peak that corresponds to the negative peak in the current Ihb at the primary side. The capacitor Cr charges when the current Ihb is flowing in a positive sense, and discharges when the current Ihb reverses. Consequently, the voltage Vcr across the capacitor Cr reaches its peak when the current Ihb crosses zero as it swings from positive to negative.

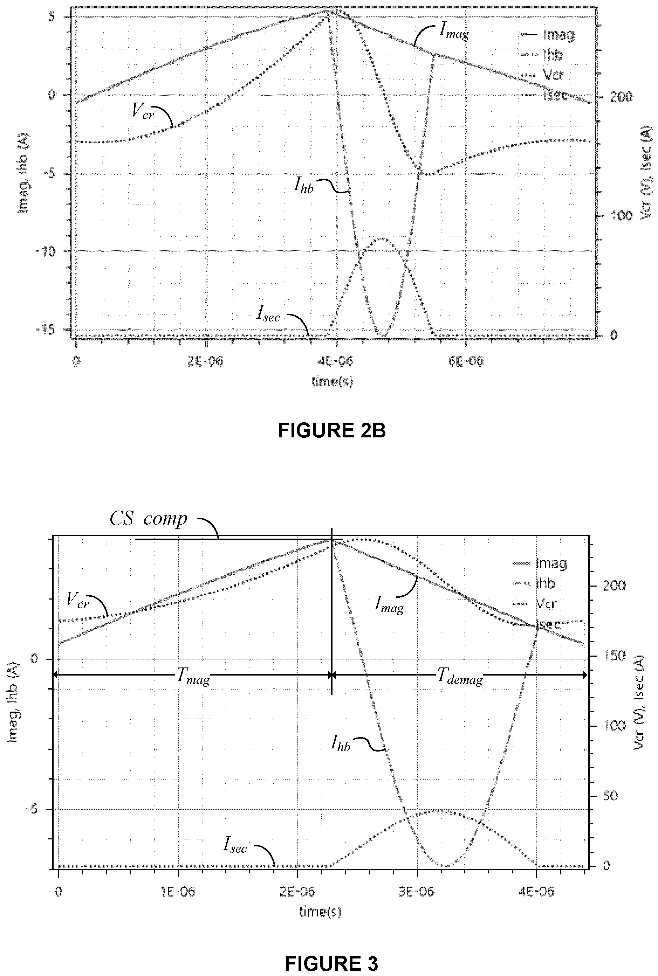

Whereas Fig. 2A shows the current and voltage waveforms when the AHB converter is operated at 100% of its rated power output, Fig. 2B shows them when it operates at 200% power (without changing the control regime). The waveforms have broadly the same shapes as in Fig. 2A. However, it can be seen that the peak currents are higher. This is true for the magnetizing current Imag but it is particularly significant for the current Ihb in the primary windings, which now has a very large negative excursion (to around -15 A, instead of around -4 A at 100% power). The peak current Isec in the secondary winding is also much higher (around 80 A instead of 20 A, previously). The duration for which the current Isec flows in the secondary winding is largely unchanged. This means that the root mean square (RMS) current is higher. Because the charging phase starts with the transformer fully demagnetized, it takes longer to reach the peak magnetizing current. Additionally, the magnetizing current Imag continues to flow for a significant length of time after the current Isec in the secondary windings has decayed to zero. In this operation mode, the control circuit waits for the magnetizing current Imag to reach zero before starting the next cycle; therefore, the effective time during which energy is transferred makes up a smaller portion of the duty cycle. If the second switching element remains on for long enough, the magnetizing current Imag swings below zero and goes negative (as seen in both Fig. 2A and Fig. 2B). This means that it reverses direction. Physically, this corresponds to a change in the direction of the poles of the core material particles.

The present inventors have recognised that it may be desirable to increase the effective duty cycle (that is, the proportion of time during which energy is transferred to the secondary side) and to reduce the peak and RMS currents. They have further recognised that it may be advantageous to maintain the resonant operation of the converter, as shown in the Ihb waveform.

In an operation mode according to an example of the present disclosure, the charging phase is started before the transformer is fully demagnetized. Exemplary waveforms illustrating this for the AHB converter of Fig. 1 are shown in Fig. 3. The magnetizing/charging phase has a duration of Tmag (now shown explicitly in the plot). The demagnetization/transfer phase has a duration of Tdemag. Also shown explicitly in the plot is the comparison value, CS_comp_value, which determines the length of the charging phase. During the charging phase, the voltage at the input CS of the control circuit 110 is indicative of the current Ihb at the primary side. When this reaches the comparison value (CS_comp_value), it triggers the control circuit to switch off the first switching element, ending the charging phase. The comparison value is set based on the feedback control signal from the secondary side. It increases as the load draws more power and decreases as the load draws less power. This enables the control circuit to respond to the changing demands of the load, by increasing or decreasing the duration of the charging phase.

The most important differences between the operation mode of Fig. 3 and the operation mode of Figs. 2A and 2B are seen in the transfer phase. The magnetizing current decreases (approximately linearly), as before, and the current Ihb in the primary winding swings negative in a resonant fashion, as before. However, the control circuit 110 does not wait for the magnetizing current to decay to zero before switching off the second switching element, switching on the first switching element, and beginning the next transfer phase. This means that the transformer does not fully demagnetize during the resonant oscillation of the current Ihb. As can be seen in the plots of Fig. 3, the negative peak in the current Ihb is now much smaller than in Fig. 2B (about-7 A, instead of -15 A, in Fig. 2B). The peak in the current Isec in the secondary winding is also reduced considerably (from around 80 A to around 40 A). This reduces the RMS current. The period during which energy is transferred to the secondary side now makes up a greater proportion of the overall cycle duration. This is partly because the charging phase is shortened, and party because there is not such a long delay between the current Isec at the secondary side decaying to zero and the start of the next charging phase (that is, until the first switching element is switched on again).

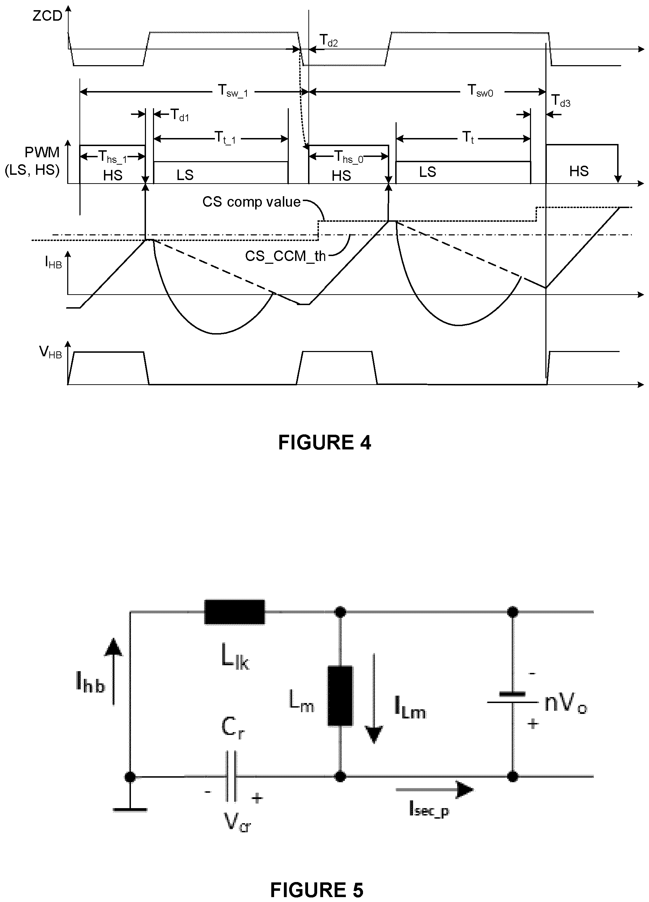

Fig. 4 illustrates the two operation modes in greater detail. The uppermost plot shows the zero current detection signal at the ZCD input of the control circuit 110. The second plot shows the pulse width modulation (PWM) control signals for the high side (first switching element) and low side (second switching element). The third plot shows the current Ihb in the primary winding. The magnetizing current Imag is also indicated here with a dashed line, where it deviates from Ihb. The fourth and lowermost plot shows the voltage Vhb across the second switching element and the resistance R (and, respectively, across the resistance R, the primary winding, and capacitor Cr).

It is assumed that the control circuit 110 is initially operating in the conventional zero-current-switching (ZCS) mode. The current Ihb ramps up while the first switching element is on. This lasts for a duration Ths_1, terminated when the current Ihb reaches the comparison value, CS_comp_value (indicated by a dotted line in Fig. 4). This ends the charging phase and begins the transfer phase. The control circuit 110 imposes a dead time Td1 before switching on the second switching element. During the transfer phase, the magnetizing current Imag decreases while the current Ihb oscillates in resonance. The control circuit 110 switches off the second switching element after a duration Tt_1. This duration Tt_1 is chosen to be long enough to allow enough time for the resonant oscillation of Ihb. When the transformer is fully demagnetized, this is detected via the zero current detection signal. The control circuit 110 imposes a dead time Td2 before switching on the first switching element again.

Now, the comparison value, CS_comp_value, increases, reflecting an increase in the current drawn by the load. It crosses a comparison value threshold CS_CCM_th, shown by the dash-dot line in Fig. 4. The control circuit 110 detects this condition and, in response, switches from the previous zero-current-switching mode to a continuous current mode (CCM) according to the present disclosure.

In the continuous current mode, the control circuit 110 still switches off the first switching element (to begin the transfer phase) in response to the current Ihb reaching the (new) comparison value, CS_comp_value. However, it no longer switches on the first switching element for the next charging phase in response to the zero current detection signal. Instead, it switches on the first switching element based on an elapsed time. This allows the first switching element to be switched on before the transformer has fully demagnetized. As can be seen in the signals plotted in Fig. 4, the first switching element is switched on at a moment when (i) the magnetizing current Imag is greater than zero, (ii) the current Ihb in the primary winding is greater than zero, and (iii) these two currents are equal. This avoids interfering with the resonant oscillation of the current Ihb in the primary winding. It helps to minimize stress on the rectifier element on the secondary side, by avoiding a large, rapid change in the current flowing (in the primary winding and likewise the secondary winding). It facilitates zero current switching for the rectifier element (e.g., diode D1) at the secondary side. All of this can help to reduce switching losses, ringing, and the generation of electromagnetic interference (EMI).

The timing of switch-on of the first switching element can be controlled in a variety of ways. According to a first implementation, the control circuit 110 sets the on-time Tt of the second switching element to be identical to its on-time Tt_1 in the final cycle of operation in the ZCS mode. The control circuit 110 then imposes a fixed dead time Td3 before switching on the first switching element (beginning the charging phase). In this example, Td3 is longer than Td2. However, this is not necessarily the case. Td3 could be the same duration as Td2, or could be shorter.

In an alternative, second implementation, the timing of switch-on of the first switching element is determined relative to the last time it was switched on. In this implementation, the control circuit 110 sets the overall length of the cycle Tsw0. The control circuit 110 may calculate the desired Tsw0 as the sum of several periods. For example, it may calculate it as Tsw0 = Tt + Ths_0 + Td1 + Td3. Here, Ths_0 is the measured on-time of the first switching element - terminated when the current Ihb reaches the threshold CS_comp_value. Td1 and Td3 are the same dead times as before. Tt is the target on-time of the second switching element. This is determined from the on-time Tt_1 in the final cycle of operation in the ZCS mode (the same as in the first implementation). The effect of the second implementation is substantially the same as the first implementation - that is, the first switching element would be switched on (and the next charging phase would therefore begin) at substantially the same moment with either implementation. However, the control circuit 110 measures a different time period (from a different starting point) in order to trigger the switch-on.

Fig. 5 shows an equivalent circuit for the primary side of the AHB converter, during the transfer phase. This will be used to explain one way of setting the comparison value threshold CS_CCM_th. The first switching element is off during the transfer phase. It is modelled as an open circuit and therefore is absent from the equivalent circuit of Fig. 5. The second switching element is on during the transfer phase. It is modelled as a short-circuit between the leakage inductance Llk and the capacitor Cr. The current Ihb flows through the leakage inductance Llk. A magnetizing current (here labelled Ilm) flows through the magnetizing inductance Lm. The output capacitor Cout at the secondary side is modelled as a voltage source with a voltage of NVout. With this equivalent circuit, the following expression can be derived for the magnetizing current as a function of time:

$$i(t) = I_p - \frac{nV_{out}}{L_m} t$$

Here. Ip is the peak magnetizing current - the current flowing when the first switching element is switched off. Rearranging the equation and solving for the time when the magnetizing current is equal to 0, gives:

$$T_{demag} \approx \frac{I_p L_m}{nV_{out}}$$

This provides a basis for setting the peak magnetizing current at which the control circuit 110 should switch over into the CCM mode. Rearranging in terms of the current:

$$I_p\big(CS_{CCM_{th}}\big) = \frac{nV_{out}T_{demag\_limit}}{L_m}$$

Here, $T_{demag\_limit}$ is a predetermined maximum demagnetization time. It may be chosen so that it long enough to allow the resonant oscillation of the primary side current Ihb. Beyond that point, it can be chosen depending on the over-power requirements of the desigin specification. If relatively more over-power is required, the time limit may be set relatively shorter. If relatively less over-power is required, the time limit may be set relatively longer. The shorter the time limit, the earlier the control circuit 110 will switch to the CCM mode.

In some cases, the comparison value threshold CS_CCM_th may be fixed - for example, based on a predetermined demagnetization time limit, as explained above. In other cases, this threshold may be adjusted dynamically during operation. As indicated by the equations above, the demagnetization time is inversely related to the output voltage. Therefore, at lower output voltages, it may be appropriate to set the maximum demagnetization time - and therefore the comparison value threshold CS_CCM_th - to a higher level. Meanwhile, at higher output voltages, it may be appropriate to set the maximum demagnetization time - and therefore the comparison value threshold CS_CCM_th - to a lower level.

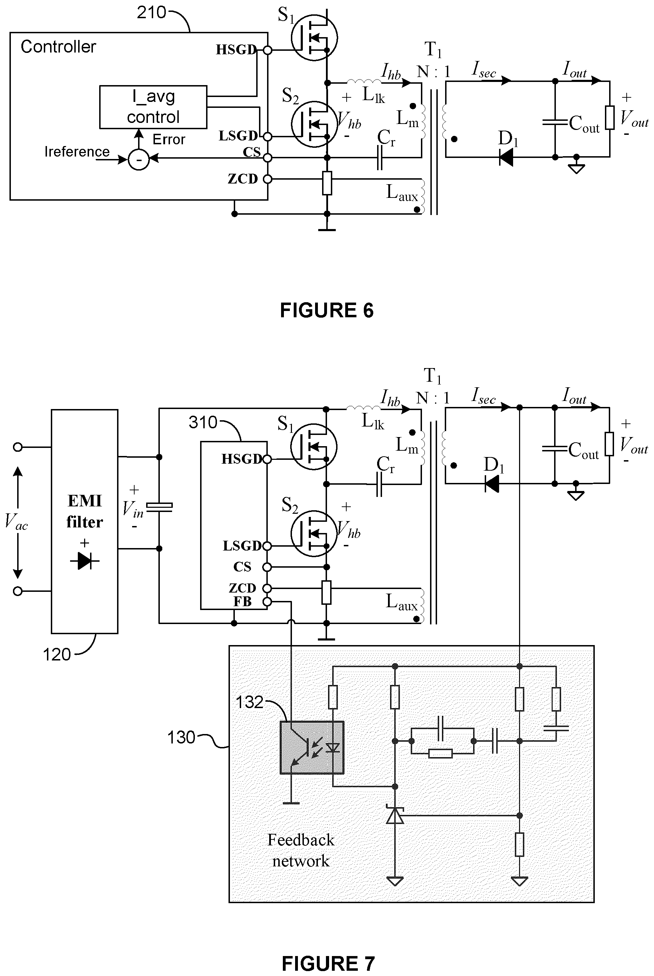

Fig. 6 shows a variant of the AHB converter illustrated in Fig. 1. The converter itself is configured similarly, but the control circuit 210 operates differently to the control circuit 110 of Fig. 1. In particular, this control circuit 210 adopts a third alternative implementation for time-based control of the switch-on of the first switching element (that is, for time-based control of the start of the charging phase). Unlike the first and second implementations, discussed above, it does not switch on the first switching element based on the on-time of the second switching element in the final cycle that was controlled under the ZCS mode. Instead, the control circuit 210 samples the current Ihb at the primary side during the charging phase and calculates an average current over several cycles. The control circuit 210 then modulates the on-time of the first switching element to regulate this average current. The control circuit 210 controls the on-time of the second switching element so that it is long enough to allow the resonant oscillation of Ihb during the transfer phase. Therefore, once again, at the moment when the high-side switching element is switched on, the magnetizing current Imag is greater than zero, the current Ihb in the primary winding is greater than zero, and these two currents are equal. The sampling of the current Ihb can be achieved by sampling the voltage at the CS input of the control circuit 210 after a predetermined delay after switch-on of the first switching element. The delay is chosen so that the control circuit samples the increasing current at the primary side at approximately the same point in its rise, in each cycle. Ireference is a reference value for the current Ihb, which is set based on the feedback control signal from the secondary side. The controller tries to adjust the PWM control signals to the two switching elements to minimise the error between the average CS value and the reference value Ireference. In steady state, the sampled average value at the CS input is equal to Ireference, the error (that is difference) between them is therefore zero, and the controller does not change the PWM control signals from one cycle to the next.

Fig. 7 shows another example of an AHB converter according to another example. Overall, it has a similar structure to that of Fig. 1 (and Fig. 6). However, the converter of Fig. 7 illustrates an alternative configuration of the switching elements with respect to the primary winding of the transformer. It also explicitly shows a feedback network 130 from the secondary side to the primary side.

In the converter of Fig. 7, the high side switching element S1 is connected in parallel with the primary winding of the transformer T1 and the capacitor Cr. The low side switching element S2 is connected in series with the primary winding and the capacitor Cr (and also in series with the high side switching element S1). The operation of the switching elements is reversed with respect to the examples of Fig. 1 and Fig. 6. For the AHB converter of Fig. 7, the charging phase corresponds to the on-time of the low side switching element S2. The transfer phase corresponds to the on-time of the high side switching element S1. Nevertheless, the circuit operates as explained before. This can be understood most easily by considering the low side switching element S2 to be the "first" switching element and considering the high side switching element S1 to be the "second" switching element.

Also shown in the AHB converter of Fig. 7 is a feedback network 130. This measures the output voltage at the secondary side and feeds an indication of the measurement back to the input FB of the control circuit 310. It should be understood that the control circuits 110 and 210 also have an input FB and a similar feedback network, but these are omitted from Figs. 1 and 6, for simplicity. The feedback network 130 includes an opto-isolator (photocoupler) 132, to preserve galvanic isolation between the primary and secondary sides of the transformer T1.

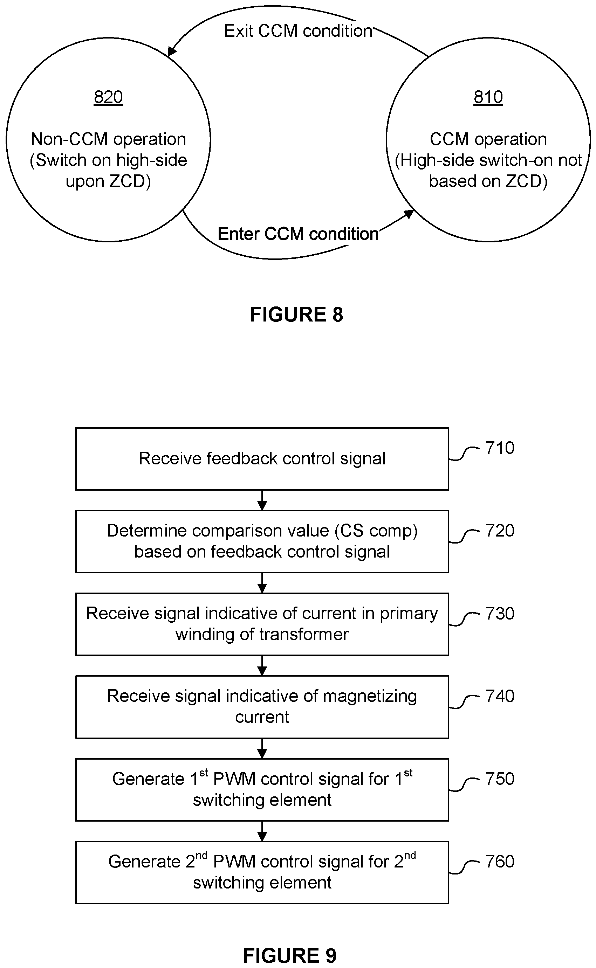

Fig. 8 is a state transition diagram illustrating the two operation modes and transitions between them. The CCM operation mode 810 is also referred to herein as the first operation mode. The non-CCM or conventional operation mode is also referred to herein as the second operation mode. It should be understood that the words "first" and "second" do not imply any sequence - they are merely convenient identifying labels. The control circuit of an AHB converter may operate initially in the second operation mode (the conventional operation mode 820, based on zero current switching). It may transition to the first operation mode (the CCM operation mode 810 of the present disclosure) when certain criteria are met. The control circuit may transition to the second operation mode when other criteria are met.

The criteria for switching to the CCM mode 810 may be associated with over-power demands from the load. The criteria for switching to the conventional ZCS mode 820 may be associated with a demand from the load that is within limits of the rated operating power.

Two types of suitable criteria have already been discussed above. In some examples, the control circuit may transition from the second mode 820 to the first mode 810 when the comparison value CS_comp_value exceeds the comparison value threshold CS_CCM_th. In these examples, the control circuit may transition from the first mode 810 to the second mode 820 when the comparison value CS_comp_value drops below the comparison value threshold CS_CCM_th.

In other examples, the control circuit may transition from the second mode 820 to the first mode 810 when the average magnetizing current exceeds a threshold average magnetizing current. The control circuit may transition from the first mode 810 to the second mode 820 when the average magnetizing current drops below the threshold average magnetizing current. It should be understood that these exemplary criteria are non-limiting. Other suitable criteria may be devised by those skilled in the art.

Fig. 9 illustrates a method performed by the control circuit 110, 210, or 310 according to one example. In step 710, the control circuit receives the feedback control signal at its input FB. The feedback control signal is provided from the secondary side of the transformer via the feedback network. In step 720, based on the feedback control signal, the control circuit determines the comparison value CS_comp which will be used to determine how long the first switching element remains switched on. This can enable the control circuit to adapt to changing power requirements of the load, at the secondary side. In step 730, the control circuit receives a signal indicative of the current in the primary winding of the transformer. In the present examples, this is received via the input CS. In step 740, the control circuit receives a signal indicative of the magnetizing current. In the present examples, this is received via the input ZCD. In step 750, the control circuit generates a first PWM control signal for the first switching element of the AHB converter. In step 760, the control circuit generates a second PWM control signal for the second switching element of the AHB converter.

The control circuit may generate the PWM control signals such that, in at least a first operation mode, the magnetizing current of the transformer remains greater than zero throughout an entire switching cycle. It is assumed that the switching cycle contains exactly one pulse of the first PWM control signal and exactly one pulse of the second PWM control signal. The start of the switching cycle may be considered to be the moment at which the first switching element switches on. However, this is somewhat arbitrary and artificial - any other definable time instant may be chosen for consideration as the start of the switching cycle. For example, the switching cycle may be considered to begin at the moment at which the second switching element switches on. Because the switching elements are controlled to be on for different on-times under different circumstances, the switching frequency of the converter is in general not constant, under varying load conditions.

In the first operation mode, the PWM control signals may be generated such that the switching element arranged in series with the primary winding is switched on at a moment when the current in the primary winding is greater than zero. Furthermore, in some examples, the current Ihb in the primary winding is equal (or approximately equal) to the magnetizing current Imag, at the moment when said switching element is switched on.

In particular, the first PWM control signal may be generated such that the first switching element is switched on when the current Ihb in the primary winding is greater than zero - and optionally substantially equal to the magnetizing current Imag of the transformer.

The control circuit may generate the PWM control signals such that, in at least a second operation mode, the magnetizing current of the transformer reduces to zero during the switching cycle. This may be achieved, in particular, by switching on the first switching element (to begin the charging phase) only after the control circuit detects a zero current event in the magnetizing current. The control circuit may detect this zero current event based on the signal received in step 740.

In both the first and the second operation mode, the control circuit may generate the PWM control signals such that the first switching element is switched off when the current in the primary winding of the transformer reaches a comparison value CS_comp. The control circuit may detect this based on a comparison between the comparison value determined in step 720 and the signal received in step 730.

AHB converters according to the present disclosure may be useful in a wide variety of applications. In typical applications, the rated power of the converter may be up to 240 W; however, converters of this kind may be used advantageously up to 600 W and beyond.

In one example, an AHB converter according to the present disclosure may be used in a power supply for an audio amplifier. An exemplary audio amplifier of this kind has nominal rated power of 300 W, with 600 W peak power.

In another example, an AHB converter according to the present disclosure may be used in a power supply for a television receiver (television set). An exemplary converter of this kind may be designed for a rated output current of approximately 5 A, with the capability to support a peak output current of approximately 15 A.

AHB converters according to the present disclosure may also be useful in computer power supplies. Of course, as those skilled in the art will appreciate, the applications to computing, TV-reception and audio-amplification are merely exemplary and not limiting on the scope of the present disclosure.

As outlined already above, examples according to the present disclosure relax the conventional requirement for a zero-current /zero-voltage switching of the switching elements. In particular, the second switching element is (by design) switched off while current is still flowing through it. It may therefore be desirable to implement the second switching element (at least) as a gallium nitride (GaN) FET. These devices may offer a greater ability to withstand the voltage stress associated with regular hard switching. Silicon carbide (SiC) transistors offer another potential alternative with similar advantages.

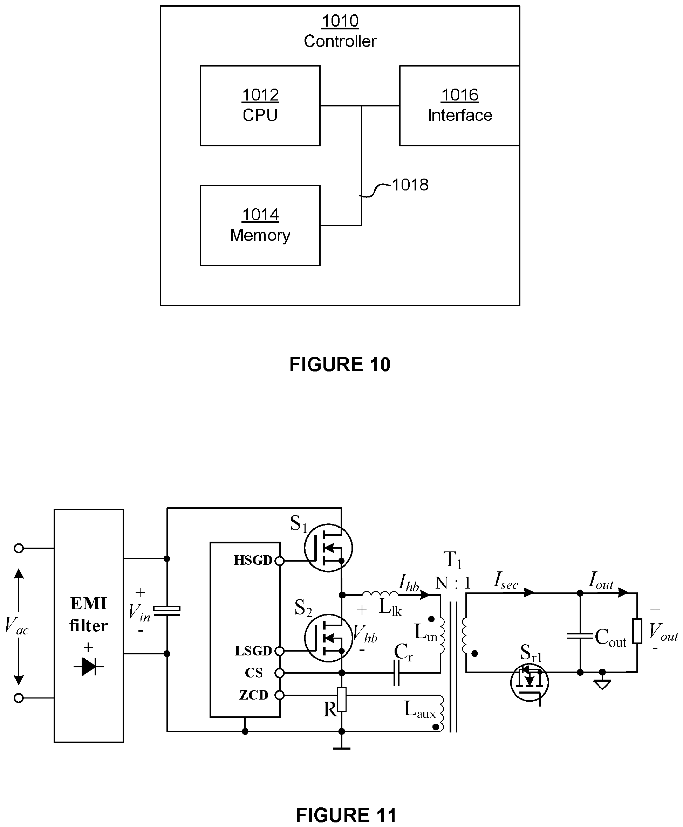

The control circuits 110, 210, 310 may be implemented in any suitable form. In one implementation, the control circuit may be provided in the form of a digital controller. An exemplary digital controller 1010 is illustrated in the simplified block diagram of Fig. 10.

The controller 1010 comprises a central processing unit (CPU) 1012, a memory 1014, and an interface 1016. The CPU, the memory, and the interface are connected by one or more interconnects 1018. The CPU may also be referred to as a "processor".

The memory 1014 may store one or more computer programs (or software or code) and/or data. The computer programs stored in the memory may include an operating system for the CPU 1012 to execute in order for the controller 1010 to function. The computer programs stored in the memory 1014 may include computer programs according to examples of the present disclosure, or computer programs that, when executed by the CPU 1012, cause the CPU 1012 to carry out a method according to an example of the present disclosure.

The CPU 1012 may be any data processing unit suitable for executing one or more computer readable program instructions, such as those belonging to computer programs stored in the memory 1014. As part of the execution of one or more computer-readable program instructions, the CPU 1012 may store data to and/or read data from the memory 1014. The CPU 1012 may comprise a single data processing unit or multiple data processing units operating in parallel or in cooperation with each other.

The interface 1016 may provide the inputs FB, CS, and ZCD to the controller. The interface 1016 may comprise one or more analogue-to-digital converters (ADCs), for converting a sensed analog voltage or current signals into digital form for processing by the CPU 1012. The interface 1016 may further provide the outputs HSGD and LSGD from the controller. The interface 1016 may comprise one or more digital-to-analogue converters (DACs), for converting signals or instructions in digital form into analogue pulse width modulated (PWM) control signals for the switching elements.

The CPU 1012 may communicate with the interface 1016 via the one or more interconnects 1018 to cause the interface 1016 to generate and output the PWM control signals. Similarly, the one or more interconnects 1018 may enable the CPU 1012 to operate on data (for example, current or voltage measurements) received by the controller 1010 via the interface 1016.

It should be noted that the above-mentioned embodiments illustrate rather than limit the invention, and that those skilled in the art will be able to design many alternative embodiments without departing from the scope of the appended claims.

For instance, in the examples described above, the rectifier element on the secondary side of the transformer was a diode. It should be understood that this is not essential. The diode could be replaced by a switching element configured to operate as a synchronous rectifier (SR). For example, the diode could be replaced by a FET controlled by a PWM control signal. A synchronous rectifier may operate more efficiently (that is, with lower losses) than a diode-based rectifier.

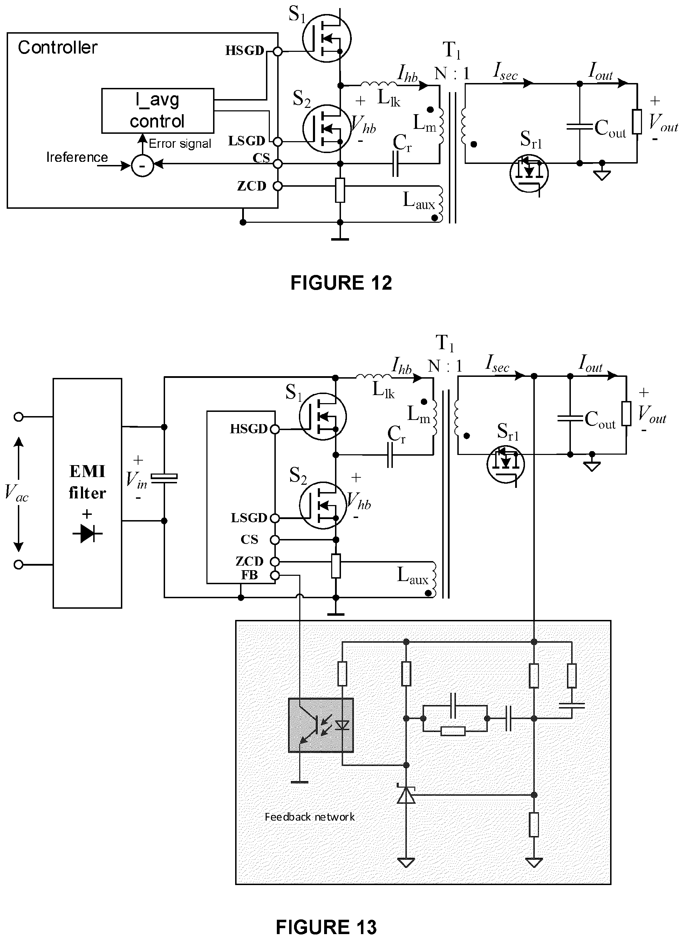

Figs. 11, 12, and 13 show variants of the circuits illustrated in Figs. 1, 6, and 7 respectively. In these variants, the diode D1 is replaced by a synchronous rectifier switch Sr1 (provided by a MOSFET). The control terminal (gate) of this switch is controlled by a PWM control signal that is identical to, or in phase with, the appropriate PWM control signal used at the primary side. In the case of Fig. 11, the synchronous rectifier is controlled in phase with the low-side switching element S2. The same is true for the circuit of Fig. 12. In the case of Fig. 13, the synchronous rectifier is controlled in phase with the high-side switching element S1. In some implementations, there is a separate controller producing a separate PWM control signal for the synchronous rectifier switch Sr1. This will turn the switch on, when it detects a voltage drop in the body diode of the switch, and will turn it off when the voltage across the switch approaches zero. Essentially, this means that the controller turns ON the switch if it detects current across the switch body diode. Apart from the replacement of the diode D1 with the synchronous rectifier switch, the structure and operation of the converters of Figs. 11, 12, and 13 is otherwise identical to their counterparts in Figs. 1, 6, and 7.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore in the appended claims lists comprising "at least one of: A; B; and C" should be interpreted as (A and/or B) and/or C.

Furthermore in general, the various examples may be implemented in hardware or special purpose circuits, software, logic or any combination thereof. For example, some aspects may be implemented in hardware, while other aspects may be implemented in firmware or software which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples described herein may be implemented by computer software executable by a data processor of the apparatus, such as in the CPU entity, or by hardware, or by a combination of software and hardware. Further, in this regard, it should be noted that any blocks of the logic flow as in the drawings may represent program steps, or interconnected logic circuits, blocks and functions, or a combination of program steps and logic circuits, blocks and functions. The software may be stored on such physical media as memory chips, or memory blocks implemented within the CPU, magnetic media such as hard disk or floppy disks, and optical media such as for example DVD and the data variants thereof, or CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Examples as discussed herein may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

## Claims

1. A control circuit for controlling an asymmetric half bridge, AHB, converter comprising a first switching element, a second switching element, a capacitor, and a transformer having a primary side and a secondary side, the transformer having a primary winding at the primary side and a secondary winding at the secondary side, wherein one of the switching elements is connected in series with the primary winding and the other switching element is connected in parallel with the primary winding, the control circuit comprising:

   a first output, for controlling the first switching element;
   a second output, for controlling the second switching element; and
   control logic, configured to generate a first pulse width modulated, PWM, control signal at the first output and a second PWM control signal at the second output,
   wherein the control logic has a first operation mode in which it is configured to cause a magnetizing current of the transformer to remain greater than zero throughout a switching period of the first and second PWM control signals and to cause a current in the primary winding to be greater than zero when the switching element in series with the primary winding is switched on.

2. The control circuit of claim 1, further comprising a current sense input, for receiving a signal indicative of a magnetizing current (Imag) in the primary winding,
   wherein the control logic is configured to switch off the first switching element based on the magnetizing current in the primary winding.

3. The control circuit of claim 2, wherein the control logic is configured to switch off the first switching element responsive to the magnetizing current in the primary winding meeting a first threshold condition.

4. The control circuit of any one of claims 1 to 3, wherein the control logic is configured, in the first operation mode, to switch on the first switching element at the end of a first time interval.

5. The control circuit of claim 4, wherein the first time interval begins at one of the following times:

when the first switching element is switched on;
when the first switching element is switched off;
and
when the second switching element is switched on.

6. The control circuit of any one of the preceding claims, wherein the control logic is configured, in the first operation mode, to switch off the second switching element at the end of a second time interval (Tt).

7. The control circuit of any one of the preceding claims, wherein the control logic is configured to switch on the second switching element at the end of a first dead time (Td1).

8. The control circuit of any one of the preceding claims, wherein the control logic is configured, in the first operation mode, to switch on the first switching element at the end of a second dead time (Td3).

9. The control circuit of any one of the preceding claims, wherein the control logic has a second operation mode in which it is configured to switch on the first switching element based on the magnetizing current in the primary winding meeting a second threshold condition.

10. The control circuit of claim 9, wherein the control logic is configured, in the second operation mode, to switch on the first switching element at the end of a third dead time (Td2), wherein the third dead time begins when the magnetizing current in the primary winding meets the second threshold condition.

11. The control circuit of claim 9 or claim 10, wherein the control logic is configured, in the first operation mode, to switch on the second switching element for a second time interval (Tt), wherein the control logic is configured to select a duration of the second time interval based on a duration of a corresponding second time interval in the second operation mode.

12. The control circuit of any one of the preceding claims, further comprising an input, for receiving a feedback control signal from the secondary side, wherein the control logic is configured to switch off the first switching element when the magnetizing current in the primary winding reaches a comparison value (CS_comp),

wherein the comparison value (CS_comp) is based on the feedback control signal, and wherein the control logic is configured to engage the first operation mode responsive to the comparison value (CS_comp) reaching a comparison value threshold (CS_CCM_th).

13. The control circuit of any one of the preceding claims, wherein the control logic is configured to dynamically adjust the comparison value threshold (CS_CCM_th).

14. A method of controlling an asymmetric half bridge, AHB, converter comprising a first switching element, a second switching element, a capacitor, and a transformer having a primary side and a secondary side, the transformer having a primary winding at the primary side and a secondary winding at the secondary side, wherein one of the switching elements is connected in series with the primary winding and the other switching element is connected in parallel with the primary winding, the method comprising:

generating a first pulse width modulated, PWM, control signal for controlling the first switching element, and
generating a second PWM control signal for controlling the second switching element,
wherein the first and second PWM control signals are generated such that, in a first operation mode, (i) a magnetizing current of the transformer remains greater than zero throughout a switching period of the first and second PWM control signals and (ii) a current in the primary winding is greater than zero when the switching element in series with the primary winding is switched on.

15. A computer program comprising computer program code configured to cause a programmable controller to carry out the method of claim 14 when said computer program is run on the programmable controller.

**FIGURE 1**

**FIGURE 2A**

FIGURE 2B

FIGURE 3

FIGURE 4

FIGURE 5

**FIGURE 6**

**FIGURE 7**

Exit CCM condition

### 820

Non-CCM operation
(Switch on high-side
upon ZCD)

### 810

CCM operation
(High-side switch-on not
based on ZCD)

Enter CCM condition

## FIGURE 8

| Receive feedback control signal | 710 |

| Determine comparison value (CS comp) based on feedback control signal | 720 |

| Receive signal indicative of current in primary winding of transformer | 730 |

| Receive signal indicative of magnetizing current | 740 |

| Generate 1st PWM control signal for 1st switching element | 750 |

| Generate 2nd PWM control signal for 2nd switching element | 760 |

## FIGURE 9

**FIGURE 10**

**FIGURE 11**

**FIGURE 12**

**FIGURE 13**

Europäisches
Patentamt

European
Patent Office

Office européen
des brevets

## EUROPEAN SEARCH REPORT

**Application Number**

EP 24 21 1879

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEDINA-GARCIA ALFREDO ET AL: "Resonant Hybrid Flyback, a New Topology for High Density Power Adaptors", ELECTRONICS, vol. 7, no. 12, 1 December 2018 (2018-12-01), page 363, XP093046586, DOI: 10.3390/electronics7120363 * Chapter 3; figures 1-4, 7 * | 1-15 | INV. H02M1/00 H02M3/00 H02M3/335 |
| X | Infineon Technologies: "XDP Hybrid-flyback Controller XDPS2201", , 10 June 2021 (2021-06-10), pages 1-75, XP093107777, Retrieved from the Internet: URL:https://www.infineon.com/dgdl/Infineon-XDPS2201-DataSheet-v01_20-EN.pdf?fileId=5546d46277921c320177b3d4ea4a2055 [retrieved on 2023-12-01] * Chapters 3.1 and 3.3; figures 1-10 * | 1-15 | |
| X,P | CN 118 282 217 A (JOULWATT TECH INC) 2 July 2024 (2024-07-02) * figures 1, 2, 4 * | 1-15 | |

TECHNICAL FIELDS
SEARCHED (IPC)

H02M

-/--

The present search report has been drawn up for all claims

| Place of search | Date of completion of the search | Examiner |
|---|---|---|
| The Hague | 25 March 2025 | Madouroglou, E |

Europäisches
Patentamt

European
Patent Office

Office européen
des brevets

## EUROPEAN SEARCH REPORT

**Application Number**

EP 24 21 1879

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUNG-SAE LEE ET AL: "Analysis and design of asymmetrical ZVS PWM half bridge forward converter with flyback type transformer", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA, IEEE, US, 20 June 2004 (2004-06-20), pages 1525-1530, XP010739723, DOI: 10.1109/PESC.2004.1355652 ISBN: 978-0-7803-8399-9 * Chapter II; figures 1-5 * | 1-15 | |
| A | EP 4 258 528 A1 (INFINEON TECHNOLOGIES AUSTRIA AG [AT]) 11 October 2023 (2023-10-11) * paragraph [0030] - paragraph [0039]; figures 1, 2, 5-7 * | 1-15 | |
| A | US 2020/112257 A1 (FAHLENKAMP MARC [DE] ET AL) 9 April 2020 (2020-04-09) * figures 1, 5 * | 1-15 | **TECHNICAL FIELDS SEARCHED (IPC)** |

The present search report has been drawn up for all claims

| Place of search | Date of completion of the search | Examiner |
|---|---|---|
| The Hague | 25 March 2025 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 1879

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | | Publication date | Patent family member(s) | | Publication date |
|---|---|---|---|---|---|
| CN 118282217 | A | 02-07-2024 | NONE | | |
| EP 4258528 | A1 | 11-10-2023 | CN | 116896274 A | 17-10-2023 |
| | | | EP | 4258528 A1 | 11-10-2023 |
| | | | US | 2023318463 A1 | 05-10-2023 |
| US 2020112257 | A1 | 09-04-2020 | CN | 111010036 A | 14-04-2020 |
| | | | DE | 102018124581 A1 | 09-04-2020 |
| | | | US | 2020112257 A1 | 09-04-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUNG-SAE LEE** ; **SANG-KYOO HAN** ; **GUN-WOO MOON**. Analysis and Design of Asymmetrical ZVS PWM Half Bridge Forward Converter with Flyback Type Transformer. *35th Annual IEEE Power Electronics Specialists Conference*, 2004